(19) Europäisches Patentamt
European Patent Office
Office européen des brevets

(11) **EP 4 040 342 A1**

(12) **EUROPEAN PATENT APPLICATION**
published in accordance with Art. 153(4) EPC

(43) Date of publication:
**10.08.2022 Bulletin 2022/32**

(21) Application number: **20871182.0**

(22) Date of filing: **29.09.2020**

(51) International Patent Classification (IPC):
***G06N 3/08*** *(2006.01)*        ***G06N 3/04*** *(2006.01)*

(52) Cooperative Patent Classification (CPC):
**G06N 3/04; G06N 3/08**

(86) International application number:
**PCT/KR2020/013304**

(87) International publication number:
**WO 2021/066504 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.10.2019   KR 20190121906
09.04.2020   KR 20200043231
22.06.2020   KR 20200075692
28.09.2020   KR 20200126288**

(71) Applicant: **Electronics and Telecommunications
Research Institute
Daejeon 34129 (KR)**

(72) Inventor: **LEE, Yong Jin
Daejeon 34125 (KR)**

(74) Representative: **Betten & Resch
Patent- und Rechtsanwälte PartGmbB
Maximiliansplatz 14
80333 München (DE)**

(54) **DEEP NEUTRAL NETWORK STRUCTURE LEARNING AND SIMPLIFYING METHOD**

(57)    The present invention relates to a method for structure learning and model compression for a deep neural network. The method for structure learning and model compression for a deep neural network according to an embodiment of the present invention includes (a) generating a parameter for a neural network model, (b) generating an objective function corresponding to the neural network model on the basis of the parameter, and (c) performing training on the parameter and performing model learning on the basis of the objective function and learning data.

FIG. 1

**Description**

[Technical Field]

The present invention relates to a method for structure learning and model compression for a deep neural network.

[Background Art]

A deep neural network (often abbreviated as DNN) is widely used in various fields such as computer processing, speech recognition, and image recognition.

Along with the development of technology related to deep neural networks, the deep neural networks have become larger and more complex, and thus the amount of computation and the amount of memory for driving the deep neural networks are rapidly increasing.

Such an increase in the amount of computation and the amount of memory causes an increase in hardware resources.

Also, deep neural networks can alleviate the burden of feature engineering of human experts, however, a lot of effort by human experts is required to design an effective structure for deep neural networks.

[Disclosure]

[Technical Problem]

The present invention has been proposed in order to solve the above-described problems and is directed to providing a method for structure learning and model compression for a deep neural network, the method being capable of decreasing the amount of computation and the amount of memory required for inference and learning a deep neural network structure optimized to obtain enhanced accuracy by removing unnecessary parts from a deep neural.

[Technical Solution]

A method for structure learning and model compression for a deep neural network according to an embodiment of the present invention includes (a) generating a parameter for a neural network model, (b) generating an objective function corresponding to the neural network model on the basis of the parameter, and (c) performing training on the parameter and performing model learning on the basis of the objective function and learning data.

The neural network model includes a plurality of components, and the plurality of components are grouped into a plurality of modules.

(a) includes generating architecture parameters and model parameters for the neural network model.

Some of the architecture parameters become zero during the training to remove unnecessary or insignificant components.

When the strength of a component corresponding to an architecture parameter becomes smaller than a certain numerical value in a competitive group, the neural network model excludes the component from the competitive group.

(c) includes performing the training on the parameter using stochastic gradient descent.

(c) includes simultaneously performing learning on weight and learning on a neural network structure.

(c) includes performing gradient computation using an element obtained by modifying the stochastic gradient descent, and performing forward computation and backward computation.

According to an embodiment of the present invention, the method further includes (b-1) generating and storing a lightweight model on the basis of a result of the training in (c).

According to an embodiment of the present invention, the method further includes (a-1) re-parameterizing the parameter after (a) and before (b).

(a-1) includes performing the re-parameterization such that the parameter can be zero.

(a-1) includes performing the re-parameterization in a sub-differentiable form such that the parameter can be zero.

[Advantageous Effects]

According to the present invention, it is possible to reduce the cost of inference and improve the performance of a deep neural network system by simultaneously learning the parameters and structure of a neural network through stochastic gradient descent (SGD)-based training.

Advantageous effects of the present invention are not limited to the aforementioned effects, and other effects not described herein will be clearly understood by those skilled in the art from the above description.

[Description of Drawings]

FIG. 1 shows a deep neural network system according to an embodiment of the present invention.
FIG. 2 shows a method for structure learning and model compression for a deep neural network according to an embodiment of the present invention.
FIG. 3 shows an objective function generating process according to an embodiment of the present invention.
FIG. 4 shows a lightweight model generating process according to an embodiment of the present invention.
FIG. 5 shows an example of applying ResNet according to an embodiment of the present invention.
FIG. 6 shows an example of applying ResNeXt according to an embodiment of the present invention.
FIG. 7 shows an example of applying DenseNet according to an embodiment of the present invention.
FIGS. 8 and 9 show an example of applying GCN according to an embodiment of the present invention.

[Modes of the Invention]

These and other objects, advantages and features of the present invention, and implementation methods thereof will be clarified through the following embodiments described with reference to the accompanying drawings.

The present invention may, however, be embodied in different forms and should not be construed as being limited to the embodiments set forth herein. Rather, these embodiments are provided so that this disclosure will fully convey the objects, configurations, and effects of the present invention to those skilled in the art. The scope of the present invention is defined solely by the appended claims.

The terminology used herein is for the purpose of describing particular embodiments only and is not intended to be limiting of the invention. As used herein, the singular forms "a," "an," and "one" include the plural forms unless the context clearly indicates otherwise. The terms "comprises" and/or "comprising," when used in this specification, specify the presence of stated elements, steps, operations, and/or components, but do not preclude the presence or addition of one or more other elements, steps, operations, and/or components.

According to an embodiment of the present invention, there is provided a fully differentiable sparsification method capable of optimizing an objective function of a neural network and learning model parameters and a sparsified structure of a neural network at the same time.

According to an embodiment of the present invention, there is provided a fully differentiable method that allows the value or connection strength of parameters to converge to zero (0) during stochastic gradient descent (SGD)-based training. As a technical feature, this method performs training on a plurality of parameters (an architecture parameter and a model parameter) at the same time on the basis of learning data and an objective function and performs model learning.

A method for structure learning and model compression for a deep neural network according to an embodiment of the present invention can be easily applied to structured sparsification or group sparsification in which sparsification is performed in groups of units or building blocks of parameters.

This can maximize the benefits of parallel computations of hardware such as a graphics processing unit (GPU) and is suitable for the latest trend of generating a deep neural network by designing elements of the deep neural network as modules and combining the modules.

A method for structure learning and model compression for a deep neural network according to an embodiment of the present invention can be easily applied to unstructured sparsification in which sparsification is performed in units of individual model parameters.

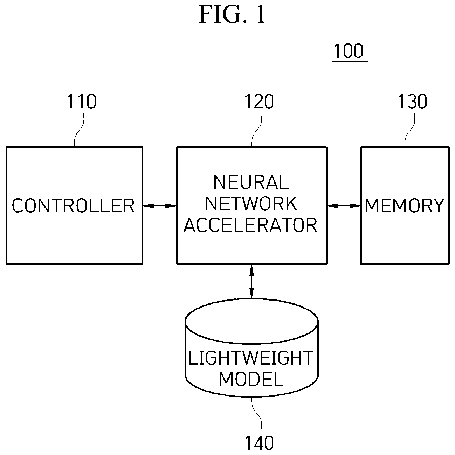

FIG. 1 shows a deep neural network system according to an embodiment of the present invention.

A deep neural network system 100 according to an embodiment of the present invention includes a controller 110, a neural network accelerator 120, a memory 130, and a lightweight model 140.

The deep neural network system 100 is configured to drive various deep neural networks (DNNs) such as ResNet, ResNeXt, DenseNet, and Graph Convolutional Network (GCN).

The deep neural network system 100 may include various computing systems or information processing systems such as personal computers, laptops, tablets, smartphones, servers, workstations, black boxes, and automotive electronic systems.

The controller 110 controls various operations performed by the deep neural network system 100.

The controller 110 determines a neural network model to be used in the neural network accelerator 120 and sets various parameters and objective functions (or loss functions or cost functions) for the determined neural network model.

The parameters set by the controller 110 are importance parameters or architecture parameters which indicate the importance of elements included in the neural network model.

Some of the importance parameters or the architecture parameters converge to zero (0) during training in the neural network accelerator 120. Neural network elements corresponding to the importance parameters having converged to zero are considered unnecessary and may be removed. The neural network accelerator 120 performs training under the control of the controller 110.

The neural network accelerator 120 receives a neural network model, an objective function, and learning data from the controller 110.

The neural network accelerator 120 performs training on the basis of information received from the controller 110 and generates a lightweight model 140 as a result of the training.

The lightweight model 140 is defined as a model in which unnecessary elements are deleted or removed from a plurality of elements included in the neural network model.

The neural network accelerator 120 performs SGD-based training.

The neural network accelerator 120 performs training on a plurality of parameters on the basis of the learning data and the objective function at the same time and performs model learning.

The memory 130 stores various pieces of information (e.g., parameter information) generated or updated during a training process of the neural network accelerator 120.

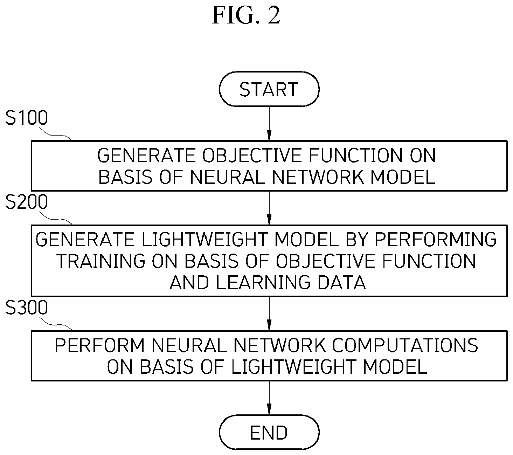

FIG. 2 shows a method for structure learning and model compression for a deep neural network according to an embodiment of the present invention.

The deep neural network system 100 generates an objective function on the basis of a neural network model (S100).

The deep neural network system 100 is configured to drive various deep neural networks (DNNs) such as ResNet, ResNeXt, DenseNet, and GCN.

The controller 110 selects a neural network model corresponding to a neural network to be trained from among the various deep neural networks and generates an objective function for the selected neural network model.

The deep neural network system 100 performs training on the basis of an objective function and learning data to generate a lightweight model 140 (S200).

The neural network accelerator 120 receives a neural network model, an objective function, and learning data from the controller 110 and performs training on the basis of the received information.

The training of the neural network accelerator 120 is performed based on an SGD scheme, unnecessary elements are removed from among a plurality of elements included in the neural network model, and the learning of a plurality of parameters is performed simultaneously with model learning.

The deep neural network system 100 performs neural network computations on the basis of the generated lightweight model 140.

The deep neural network system 100 performs various neural network computations, such as speech recognition, image recognition, and image classification, on input data on the basis of the lightweight model 140.

A deep neural network system according to an embodiment of the present invention optimizes an objective function (or a cost function or loss function) for a neural network model and then performs training, and thus it is possible to perform model compression on a deep neural network structure and increase the overall computation speed.

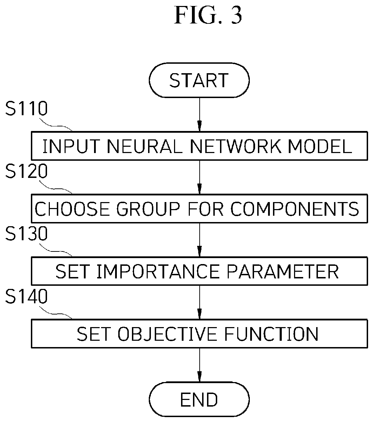

FIG. 3 shows an objective function generating process according to an embodiment of the present invention.

A controller 110 receives a neural network model (S110).

The controller 110 chooses a group for components (S120) and receives information on a neural network model to be trained by a neural network accelerator 120, among various deep neural network models.

As an example for describing structured sparsification (group sparsification) in which sparsification is performed in groups of parameter groups or building blocks, it is assumed that a module included in a neural network model or a neural network is defined by Equation 1. A model in Equation 1 is referred to as a base model.

[Equation 1]

$$y(x) = \sum_{i=1}^{n} a_i f_i(x; w_i)$$

Referring to Equation 1, y is an output of the base model or a module included in the base model (i.e., a neural network model) and f is a plurality of components included in a module.

Also, i is an index for distinguishing a plurality of components, and n indicates the number of components.

The output of the base model, i.e., y, is defined as a linear combination of the components f included in the module.

A group of the components may be a module that is described with reference to Equation 1 and may be set variously depending on the type of the deep neural network.

For example, a component may be a building block for the neural network or may be outputs of a building block.

A component may be a residual block of ResNet, a branch of a residual block of ResNeXt, or a feature map of a densely connected layer of DenseNet.

A module may represent the entire neural network or a set of components such as a stage of ResNet, a residual block of ResNeXt, and a concatenated feature map of DenseNet.

x is an input to a module, w is a model parameter (or weight) for a component f, and a is an architecture parameter or an importance parameter.

The model parameter w is an ordinary parameter such as a convolution layer filter and a fully connected layer weight.

The value of an architecture parameter a indicates the importance of a corresponding component and may be considered as connection strength between blocks.

An architecture parameter a of zero (0) denotes that a corresponding component f is removed or corresponding model parameters w all become zero.

By inducing competition between architecture parameters a and inducing the architecture parameters a to become zero through the competition, some of the architecture parameters may become zero, and thus unnecessary or insignificant components are removed.

The controller 110 sets an architecture parameter (S130).

When the architecture parameter a becomes zero during training for the neural network model, corresponding components may be removed as unnecessary or insignificant ones. To this end, the architecture parameter a is defined by Equation 2.

[Equation 2]

$$\gamma_i = \exp(\alpha_i)$$

$$\tilde{\gamma}_i = (\gamma_i - \sigma(\beta) \cdot \|\gamma\|_1)_+$$

$$a_i = \frac{\tilde{\gamma}_i}{\sum_{j=1}^{n} \tilde{\gamma}_j}$$

Referring to Equation 2, $\alpha$ and $\beta$ are unconstrained free parameters, $\sigma(\cdot)$ is a sigmoid function, and $(\cdot)_+$ is a rectified linear unit (ReLU) function, i.e., relu$(\cdot)$=max$(\cdot,0)$.

When the architecture parameter a is set as defined in Equation 2, the architecture parameter a may converge to zero during training.

The free parameters $\alpha$ and $\beta$, which are real numbers, are not constrained during a training process using stochastic gradient descent, and thus the architecture parameter a is trained through the free parameters $\alpha$ and $\beta$.

In Equation 2, an exponential function exp$(\cdot)$ makes the architecture parameter a be positive. In this case, a sigmoid function may be used instead.

In a general case, the exponential function exp$(\cdot)$ in Equation 2 cannot make the architecture parameter a be

zero, but $\tilde{\gamma_i}$ in Equation 2 may become zero due to a thresholding operation, and thus the architecture parameter *a* may become zero.

The term $\sigma(\beta) \cdot \|\gamma\|_1$ for $\tilde{\gamma_i}$ in Equation 2 may serve as a threshold. When the strength of an ith component fi is smaller than the entire strength in a competitive group, the ith component $f_i$ is excluded from the competitive group.

In Equation 2, the scalar parameter $\beta$, which determines the magnitude of the threshold, may not be a hyper-parameter and may be automatically determined through training.

Mathematically, the thresholding operation is not differentiable. However, this is not important, considering that relu is supported as a differentiable function embedded in the latest deep neural network learning tool. This is because differentiation is not defined only at a specific point (0) but is possible in a domain of most input values and also a sub-gradient is present in all domains.

Also, since $\gamma$ is non-negative, $l_1$-norm may be simplified to the sum of $\gamma_i$ (i.e., $\|\gamma\|_1 = \Sigma\gamma_i$).

In Equation 2, softmax promotes competition between architectural parameters *a*.

A null component indicating that all components are removed and that the module y is invalidated may be modeled. In Equation 3, a threshold may be considered as non-chosen strength, and thus the strength of a null operator is defined by Equation 3.

[Equation 3]

$$\tilde{\gamma}_{n+1} = \sum_{i=1}^{n} \min(\gamma_i, \sigma(\beta) \cdot \|\gamma\|_1)$$

Based on Equation 3, the initial value of $\alpha_i$ is set to zero, and the value of $\beta$ may be set to $-\log(n^2+n-1)$. Thus, each component including a null operator is set such that $\tilde{\gamma_i} = \tilde{\gamma}_{n+1}$ when i=1,...n, in order to initially have the same change of survival to provide the same initial chance. This is an example for the initial values of $\alpha_i$ and $\beta$, and it is not necessary to set the initial value of $\alpha_i$ to 0 and the value of $\beta$ to $-\log(n^2+n-1)$.

Considering the null operator, $\tilde{\gamma_i}$ may be regularized to configure the architecture parameter *a* as defined in Equation 4.

[Equation 4]

$$a_i = \frac{\tilde{\gamma}_i}{\sum_{j=1}^{n} \tilde{\gamma}_j + \tilde{\gamma}_{n+1}}$$

By setting the architecture parameters *a* for a plurality of components included in the neural network model (or the base model), at least some of the importance parameters or the architecture parameters *a* converge to zero during a training process using stochastic gradient descent. Components with importance parameters or architecture parameters of zero may be regarded as unnecessary or insignificant components and then removed. The controller 110 sets an objective function for the neural network model (S140).

The objective function (or cost function or loss function) is expressed as Expression 5.

[Expression 5]

$$\mathcal{L}(D, W, a) + \lambda \mathcal{R}(a)$$

Referring to Expression 5, $\mathcal{L}$ is a prediction loss, $\mathcal{R}$ is a regularization term, *D* is a set of learning data, *W* is a set of model parameters w (i.e., $\{w_i\}$), $\lambda$ is a factor for controlling the trade-off between prediction loss and model complexity, and *a* is a vector composed of architecture parameters.

In classification, cross entropy may be used as a prediction loss function. In regression analysis, mean squared error may be used as a loss function.

The architecture parameter *a* being sparsified or becoming zero denotes that a deep neural network is simplified and sparsified. The regularization term $\mathcal{R}$ for the architecture parameter *a* may be used to sparsify the architecture parameter *a* or additionally promote competition between elements of the architecture parameter *a*.

According to an embodiment of the present invention, since the architecture parameter *a* is normalized using softmax, $l_1$-norm always becomes one (i.e., $\|a\|_1 = \sum_{i=1}^{n} |a_i| = 1$ ).

Accordingly, the regularization term using the conventional $l_1$-norm does not operate for the architecture parameter *a* according to an embodiment of the present invention. According to an embodiment of the present invention, the regularization term uses p-norm as in Equation 6, and it is preferable that p<1.

[Equation 6]

$$\mathcal{R}(a) = \left( \sum_{i=1}^{n} |a_i|^p \right)^{\frac{1}{p}} = \left( \sum_{i=1}^{n} a_i^p \right)^{\frac{1}{p}}$$

Since the architecture parameter *a* is always non-negative, the second inequality in Equation 6 can be established.

The p-norm with p<1 decreases when most of the elements of the architecture parameter *a* are zero, and for example, p may be equal to 0.5.

The regularization term defined in Equation 6 is differentiable in almost all situations except when an architecture parameter *a* of relu is zero (i.e., $a_i$=0).

According to an embodiment of the present invention, since the regularization term is differentiable in almost all domains and also the architecture parameter becomes zero during training, the architecture parameter and the model parameter may be simultaneously learned using stochastic gradient descent. This means that a neural network structure may be learned simultaneously with ordinary parameters such as such as a convolution layer filter and a fully connected layer weight.

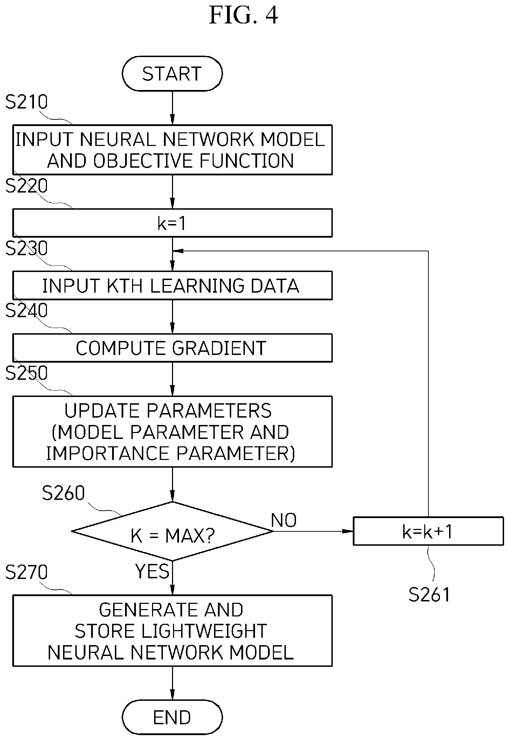

FIG. 4 shows a lightweight model generating process according to an embodiment of the present invention.

A neural network accelerator 120 receives a neural network model and an objective function (S210).

A variable k is set to one (S220).

The variable k is for describing the iteration of a training operation of a neural network accelerator.

The neural network accelerator 120 receives $k^{th}$ learning data from a controller 110 or a separate input device (S230). For example, the $k^{th}$ learning data is input in the form of a mini-batch.

The neural network accelerator 120 performs SGD-based training.

The neural network accelerator 120 may compute a gradient on the basis of the $k^{th}$ learning data, the neural network model, and the objective function (S240).

The neural network accelerator 120 may update the values of the parameters (model parameter w and architecture parameter *a*) on the basis of the computed gradient (S250).

The parameters (model parameter w and architecture parameter *a*) may be updated to parameters by which the objective function is optimized (i.e., minimized) on the basis of the computed gradient (i.e., the gradient of the objective function).

Subsequently, it is determined whether the variable k is the maximum (i.e., whether the training is repeated a given number of times) (S260).

When the variable *k* is not the maximum, the variable *k* is increased by one (S261), and operation S230 is performed.

When the variable k is the maximum, the neural network accelerator 120 generates and stores a lightweight model 140 (S270).

In operation S240, gradient computation is performed based on SGD.

In this case, gradient computation may be performed using modified SGD. For example, computations for forward pass and backward pass may be modified and used. The forward pass computation for the architecture parameter *a* may be performed based on Equation 2, and the backward pass computation for the architecture parameter *a* may be performed by replacing $\tilde{\gamma}_i$ of Equation 2 with Equation 7.

[Equation 7]

$$\tilde{\gamma}_i = elu(\gamma_i - \sigma(\beta) \cdot \|\gamma\|_1)$$

Referring to Equation 2 and Equation 7, the function for $\tilde{\gamma}_i$ is changed from relu to elu, and other elements are the same.

elu indicates an exponential linear unit (ELU) function.

In Equation 2, when $\gamma_i$ is smaller than the threshold, the gradient becomes zero, and gradient-based learning information cannot be generated for a corresponding component. However, $\gamma_i$ being smaller than the threshold does not mean that a component has to be removed and that learning information can no longer be generated while learning is in progress.

With the adjustment of the threshold or the decrease of the importance score of other components, there is an opportunity for components to return.

According to an embodiment of the present invention, there is disclosed a method of approximating the gradient of the thresholding function to continuously generate learning information for even components in which $\gamma_i$ is smaller than the threshold. According to an embodiment of the present invention, elu may be used for gradient computation as described above, and relu and elu have the same output value in the positive domain. Also, since the differential coefficient of elu is not zero in all domains, it is possible to approximate relu well. relu may be used for the forward pass, and elu may be used for the backward pass as in Equation 7.

According to an embodiment of the present invention, implementation is easy by using the latest deep neural network learning tools, and this learning can be performed in a framework for stochastic gradient optimization such as Tensorflow of Google.

According to an embodiment of the present invention, model parameters of the neural network model (i.e., ordinary parameters such as such as a convolution layer filter and a fully connected layer weight) and architecture parameters of each component may be simultaneously learned during SGD-based training.

Accordingly, it is possible to simplify a neural network compression process and improve neural network computation performance using a generated lightweight model.

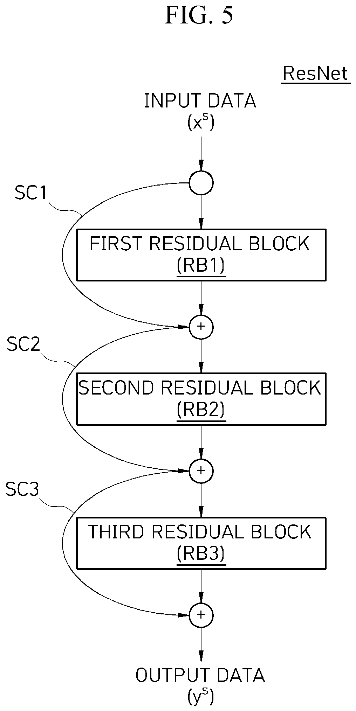

FIG. 5 shows an example of applying ResNet according to an embodiment of the present invention.

Referring to FIG. 5, ResNet includes a plurality of stages.

One stage of ResNet is shown in FIG. 5, and it is assumed that one stage includes first to third residual blocks RB1 to RB3.

As shown in FIG. 5, input data $x^s$ is provided to the first residual block RB1. An output of the first residual block RB1 in addition to the input data $x^s$ is provided to an input of the second residual block RB2. An output of the second residual block RB2 in addition to the input of the second residual block RB2 is provided to an input of the third residual block RB3. An output of the third residual block RB3 in addition to the input of the third residual block RB3 is output as output data $y^s$ of the stage.

The residual blocks RB1 to RB3 are connected to one another through first to third shortcuts SC1 to SC3.

Each stage of ResNst may be considered an independent group, and a different depth may be learned at each stage.

A residual block and a stage of ResNest may correspond to the above-described component and module, respectively, and an output of one stage of ResNet may be expressed as Equation 8.

[Equation 8]

$$\mathbf{y}^s(\mathbf{x}^s) = \mathbf{x}^s + \sum_{i=1}^{n_s} a_i^s \mathbf{f}_i^s(\mathbf{x}_i^s; \mathbf{w}_i^s)$$

Referring to Equation 8, $y^s$ is a stage or an output of a stage, $x^s$ an input of a stage, $n_s$ is the number of residual blocks included in a stage, $f_i^s$ is a residual block, $w_i^s$ is a model parameter for $f_i^s$, $\mathbf{x}_1^s = \mathbf{x}^s$ , and

$$\mathbf{x}_i^S = \mathbf{x}_{i-1}^S + a_{i-1}^S \mathbf{f}_{i-1}^S(\mathbf{x}_{i-1}^S; \mathbf{w}_{i-1}^S)$$

Blocks included in the same stage (e.g., the first to third residual blocks RB 1 to RB3) compete with each other during a training process, and some elements of the importance parameter or the architecture parameter $a$ converge to zero. Accordingly, the depth is determined.

For example, when the second residual block RB2 is insignificant or unnecessary in implementing ResNet, an architecture parameter corresponding to the second residual block RB2 converges to zero during a training process, and the second residual block RB2 is removed.

Even if some blocks are removed, forward and backward passes are not completely disconnected because the shortcuts SC1 to SC3 are present between the blocks.

According to an embodiment of the present invention, an objective function applied to ResNet is expressed as Expression 9.

[Expression 9]

$$\mathcal{L}(D, W, A) + \sum_{s=1}^{S} \lambda_s \mathcal{R}(a^s)$$

Referring to Expression 9, $W = \{w_i^s\}$ and, $A = \{a^s\}$.

$S$ is the number of stages, and $a^s$ is a vector of architecture parameters in an $s^{th}$ stage.

According to an embodiment of the present invention, by applying an architecture parameter and an objective function to ResNet, which is one type of deep neural network, and removing unnecessary components during a training process of ResNet, it is possible to perform model compression on a neural network model of ResNet. This is to learn the number or depths of residual blocks in each stage.

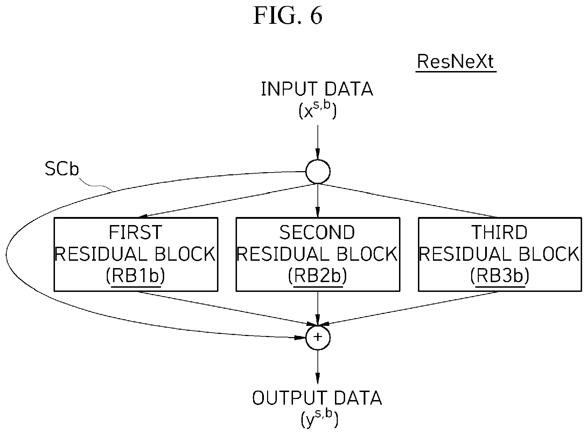

FIG. 6 shows an example of applying ResNeXt according to an embodiment of the present invention.

Referring to FIG. 6, unlike ResNet, ResNeXt has a residual block including a plurality of branches. One layer and one residual block for ResNeXt are shown in FIG. 6, and it is assumed that one residual block includes first to third residual branches RB1 to RB3.

As shown in FIG. 6, input data $x^{s,b}$ is provided to first to third residual branches RB1 to RB3, and outputs of the first to third residual branches RB1 to RB3 in addition to the input data $x^s$ are output as output data $y^{s,b}$ of the layer or residual block.

ResNeXt has a structure similar to that of ResNet which has been described above with reference to FIG. 5, but each residual block of ResNet has a single branch, whereas each residual block of ResNeXt includes a plurality of branches.

Similar to ResNet, layers or residual blocks of ResNeXt are connected through shortcuts.

In ResNeXt, each residual block is considered an independent group, and a different width (cardinality) or a different number of residual branches may be learned in each residual block by removing unnecessary residual blocks.

A residual block and a residual branch of ResNeXt correspond to a component and a module, respectively, and an output of a layer or a residual block is expressed as Equation 10.

[Equation 10]

$$\mathbf{y}^{s,b}(\mathbf{x}^{s,b}) = \mathbf{x}^{s,b} + \sum_{i=1}^{n_{s,b}} a_i^{s,b} \mathbf{f}_i^{s,b}(\mathbf{x}_i^{s,b}; \mathbf{w}_i^{s,b})$$

Referring to FIG. 10, , $y^{s,b}$ is a $b^{th}$ residual block in an $s^{th}$ stage, $f_i^{s,b}$ is a $i^{th}$ branch of a $b^{th}$ residual block, $x^{s,b}$ is an input of a $b^{th}$ residua block and branch, $n_{s,b}$ is the number of branches, and $w_i^{s,b}$ is a model parameter of $f_i^{s,b}$.

Branches in the same block compete with each other during a training process, and thus a width is learned.

According to an embodiment of the present invention, an objective function applied to ResNeXt is expressed as Expression 11.

[Expression 11]

$$\mathcal{L}(D, W, A) + \sum_{s=1}^{S} \lambda_s \sum_{b=1}^{B_s} \mathcal{R}(a^{s,b})$$

Referring to Expression 11, $W=\{w_i^{s,b}\}$, and $A=\{a^{s,b}\}$.

$B_s$ is the number of residual blocks in an $s^{th}$ stage, and $a^{s,b}$ is a vector of an architecture parameter for a $b^{th}$ residual block of an $s^{th}$ stage.

According to an embodiment of the present invention, by applying an architecture parameter and an objective function to ResNeXt, which is one type of deep neural network, and removing unnecessary components during a training process of ResNeXt, it is possible to optimize, and perform model compression on, a neural network model of ResNeXt.

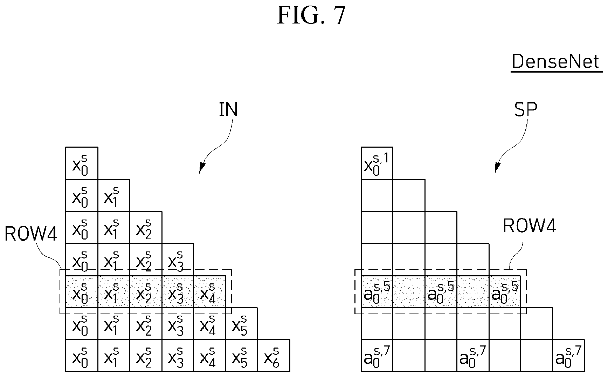

FIG. 7 shows an example of applying DenseNet according to an embodiment of the present invention.

Referring to FIG. 7, DenseNet includes a plurality of stages. One stage of DenseNet is shown in FIG. 7, and it is assumed that one stage includes first to seventh layers.

In an input data structure (IN) shown in FIG. 7, the index s is stage, and a first layer has an input expressed as a first row and an output expressed as $x_{1+1}^s$.

A fourth row ROW4 is an input of a fourth layer, and $x_{4+1}^s$ is an output of a fourth layer.

A trained architecture parameter structure (SP) according to an embodiment of the present invention may be defined as shown in FIG. 7.

DenseNet may be configured such that some parameters in the fourth row ROW4 converge to zero through training according to an embodiment of the present invention.

In DenseNet, an input of a layer is composed of feature maps output from all previous layers.

By grouping feature maps in a row unit and allowing input feature maps to compete with each other according to an embodiment of the present invention, the most efficient features or connections may be selected at each layer.

The layer of DenseNet may be expressed as Equation 12. Thus, dense connections between layers are learned.

[Equation 12]

$$\mathbf{x}_l^s = f_l^s\left(\left[a_0^{s,l}\mathbf{x}_0^{s,l}, a_1^{s,l}\mathbf{x}_1^{s,l}, \ldots, a_{l-1}^{s,l}\mathbf{x}_{l-1}^{s,l}\right]; \mathbf{w}_l^s\right)$$

Referring to Equation 12, $x_1^s$ is an output feature map of a first layer at an $s^{th}$ stage, and $x_0^s$ is obtained from the previous stage.

$f_1^s$ is a nonlinear composition function, [·] is a concatenation operator, and $w_1^s$ is a model parameter.

According to an embodiment of the present invention, an objective function applied to DenseNet is expressed as Expression 13.

[Expression 13]

$$\mathcal{L}(D, W, A) + \sum_{s=1}^{S} \lambda_s \sum_{b=1}^{L_s} \mathcal{R}(a^{s,l})$$

Referring to Expression 13, $W=\{w_i^s\}$, and $A=\{a^{s,1}\}$.

$L_s$ is the number of layers in an $s^{th}$ stage, and $a^{s,1}$ is a vector of an architecture parameter for a first block of an $s^{th}$ stage.

According to an embodiment of the present invention, by applying an architecture parameter and an objective function to DenseNet, which is one type of deep neural network, and removing unnecessary components during a training process of DenseNet, it is possible to optimize, and perform model compression on, a neural network model of DenseNet.

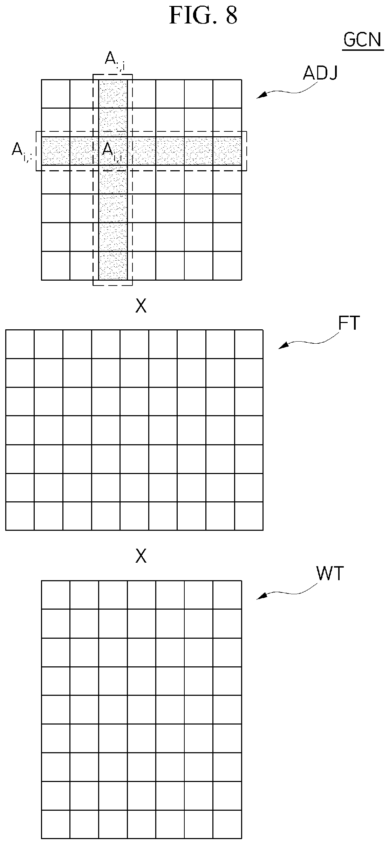

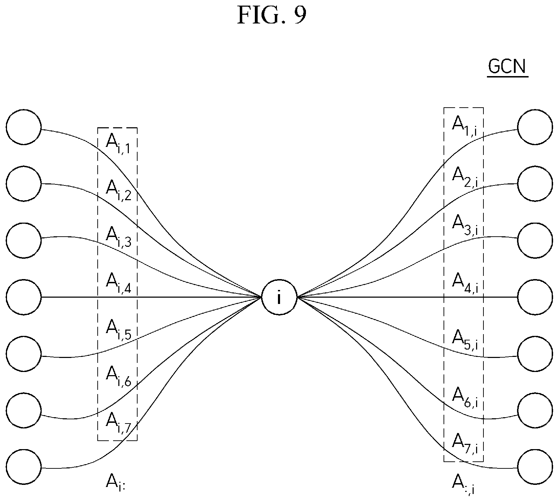

FIGS. 8 and 9 show an example of applying GCN according to an embodiment of the present invention.
GCN may include a plurality of layers. One layer is shown in FIG. 8, and it is assumed that one layer includes an adjacency matrix ADJ, a feature map matrix FT, and a weight matrix WT.
A layer of GCN is expressed as Equation 14.

[Equation 14]

$$H^{l+1} = F(AH^l W^l)$$

Referring to Equation 14, A is an adjacency matrix ADJ, $H^1$ and $W^1$ are an input feature map matrix FT and a weight matrix WT for a first layer, and F is a nonlinear activation function.
Elements of A are non-negative and shared between GCN blocks or layers.

A is obtained by normalization such as $A = \tilde{D}^{-1}\hat{A}$ or $A = \tilde{D}^{-\frac{1}{2}}\tilde{A}\tilde{D}^{-\frac{1}{2}}$.
In this case, $\tilde{A}$ is a non-normalized adjacency matrix, and $\tilde{D}$ is a diagonal matrix with $\tilde{D}_i = \Sigma_j \tilde{A}_{i,j}$.
The adjacency matrix may indicate relationships or connections between nodes on a graph and is given by an expert who has knowledge about domains.
Learning the value of $A_{i,j}$ is learning a relationship between node i and node j. For example, when the value of $A_{i,j}$ is zero, the two nodes i and j may be considered unrelated with each other.
As shown in FIGS. 8 and 9, each row and each column of the adjacency matrix may be defined as a group.
A competition between in-coming nodes may be generated by grouping rows, and a competition between out-going nodes may be generated by grouping columns. For example, as shown in FIGS. 8 and 9, a competition between in-coming nodes for an $i^{th}$ node is generated by grouping an $i^{th}$ row $A_{i,:}$, and a competition between out-going nodes for an $i^{th}$ node is generated by grouping an $i^{th}$ column $A_{:,j}$.
Each row and each column of a non-normalized adjacency matrix $\tilde{A}$ may be parameterized similarly to $\tilde{\gamma}$ in Equation 2.
Softmax normalization may be replaced with Sinkhorn normalization.
It is preferable that the sum of the rows and the sum of the columns are equal to one.
By initializing A using $\tilde{A}$ and repeatedly applying Equation 15, $\tilde{A}$ is transformed into a doubly stochastic matrix.

[Equation 15]

$$A = D_r^{-1} A \text{ with } [D_r]_i = \sum_j A_{i,j}$$

$$A = D_c^{-1} A \text{ with } [D_c]_j = \sum_i A_{i,j}$$

Referring to Equation 15, $D_r$ and $D_c$ are diagonal matrices.
Balanced normalization is performed by repeatedly applying Equation 16.

[Equation 16]

$$A = D_r^{-\frac{1}{2}} A D_c^{-\frac{1}{2}}$$

It has been verified that $\tilde{A}$ is transformed into a doubly stochastic matrix through numerical experiments by repeatedly applying Equation 16.
Since competitive groups are generated in units of a row and a column, a corresponding objective function is expressed as Expression 17.

[Expression 17]

$$\mathcal{L}(D, W, A) + \frac{\lambda}{2}\sum_{i=1}^{N}\left[\mathcal{R}\left(A_{i,:}\right) + \mathcal{R}\left(A_{:,j}\right)\right]$$

Referring to Expression 17, $W=\{W^1\}$, N is the size of a square matrix A, and $A_{i,:}$ and $A_{:,j}$ are an $i^{th}$ row vector and an $i^{th}$ column vector of A.

According to an embodiment of the present invention, by applying an architecture parameter and an objective function to GCN, which is one type of deep neural network, and removing unnecessary components of an adjacency matrix during a training process of GCN, it is possible to optimize, and perform model compression on, a neural network model of GCN.

In an exemplary embodiment, the present invention may be compared to a group sparsity regularization method using $l_{2,1}$-norm.

Here, a group may be defined as a set of parameters for a filter, neuron, or layer such that all parameters in the same group are maintained or become zero.

Group sparsity may be applied to automatically determine the number of neurons and layers.

An objective function regularized using $l_{2,1}$-norm may be expressed as Expression 18.

[Expression 18]

$$\mathcal{L}(D, W) + \lambda\mathcal{R}(W)$$

The regularization term of Expression 18 is expressed as Equation 19.

[Equation 19]

$$\mathcal{R}(W) = \sum_{g}\|\mathbf{w_g}\|_2 = \sum_{g}\sqrt{\sum_{i}w_{g,i}^2}$$

Referring to Equation 19, $W=\{w_g\}$, and $w_g$ is a group of model parameters.

In order to optimize the regularization term, parameter update is performed using a proximal operator as in Expression 20.

[Expression 20]

$$\omega_{g,i} \leftarrow \left(\frac{\|\mathbf{w}_g\|_2 - \eta\lambda}{\|\mathbf{w}_g\|_2}\right)_{+}\omega_{g,i}$$

Referring to Expression 20, an operator $\leftarrow$ is an assignment operator, and $\eta$ is a learning rate.

The proximal operator includes a weight decaying step and a thresholding step, and the steps are separately performed after prediction loss optimization in all mini-batches or epochs.

Parameter update using proximal gradient descent may be considered as a model discretization step.

Also, since the above-described operations are performed as steps separate from optimization for prediction loss, these methods have limitations in finding a sparse deep neural network structure and an optimized model parameter value.

Conversely, according to an embodiment of the present invention, it is possible to simultaneously optimize prediction accuracy and model complexity and thus optimize a trade-off between the above-described elements.

Also, it is possible to learn a sparse structure using SGD without additional discrete steps.

In an exemplary embodiment, another related group regularization scheme is an exclusive lasso with $l_{1,2}$-norm.

The exclusive lasso may be used to promote sparsity within a group, instead of removing or maintaining the entire group.

In this case, the regularization term may be expressed as Equation 21.

[Equation 21]

$$\mathcal{R}(W) = \frac{1}{2}\sum_g \|\mathbf{w_g}\|_1^2 = \frac{1}{2}\sum_g \left(\sum_i |\omega_{g,i}|\right)^2$$

In order to optimize the regularization term, learning is performed using a proximal operator of Expression 22.

[Expression 22]

$$\omega_{g,i} \leftarrow sign(\omega_{g,i})\left(|\omega_{g,i}| - \eta\lambda\|\mathbf{w}_g\|_1\right)_+$$

In Expression 22, when $\omega_{g,i}$ is non-negative, the proximal operator is simplified into the form of $\tilde{\gamma}_i$ in Equation 2.

However, the proximal operator is a learning rule, whereas $\tilde{\gamma}_i$ of Equation 2 is obtained by parameterizing an architecture parameter. Their meanings are totally different. Expression 22 is a learning method for sparsifying a deep neural network, and Equation 2 is a model configuration method for a deep neural network. When a deep neural network is configured as in [Equation 2] and learning is performed, unnecessary parameters automatically converge to zero.

According to an embodiment of the present invention, the structure of the neural network may be learned by optimizing an architecture parameter in a relaxed continuous domain.

According to an embodiment of the present invention, it is possible to learn the structure of an optimized deep neural network that secures improved accuracy while reducing the amount of computation and the amount of memory required for inference by removing unnecessary parts of the deep neural network without using an importance parameter or an architecture parameter.

Structured sparsity and unstructured sparsity will be described below.

In order to configure a deep neural network with structured sparsity, an original model parameter $\omega_{g,i}$ is re-parameterized in a sub-differentiable form or a differentiable form in almost all input domains as in Equation 23.

[Equation 23]

$$\tilde{\omega}_{g,i} = \left(\frac{\|\mathbf{w}_g\|_2 - \exp(\beta_g)}{\|\mathbf{w}_g\|_2}\right)_+ \omega_{g,i}$$

Referring to Equation 23, $(\cdot)_+$ indicates that relu = $\max(\cdot, 0)$, and is used instead of an ordinary parameter such as a convolution filter.

When the size of the group is smaller than $\exp(\beta_g)$, all parameters in the same group become zero (zero-out).

$\beta_g$ is a constant, but is a trainable parameter that can be adjusted in consideration of a trade-off between the regularization term and a prediction loss through training.

Considering the support of relu as a built-in differentiable function of the latest deep neural network tool, it does not matter in performing SGD-based learning as in the method using Equation 2.

The proximal operator of Expression 20 has a similar form to Equation 23. However, the proximal operator is a learning rule, whereas Equation 23 is in a parameterized form of a model parameter, which is a part of a neural network. Their meanings are totally different. Accordingly, according to an embodiment of the present invention, by learning a model parameter $\omega_{g,i}$ and a threshold parameter $\beta_g$ to make unnecessary parameters become zero, it is possible to learn the structure of the neural network as well as to perform model compression on the neural network.

That is, according to an embodiment of the present invention, a model structure and a model parameter may be simultaneously learned using SGD. In an exemplary embodiment, according to the present invention, it is appropriate for the model parameters to finally be zero.

That is, when $w_g=0$, a numerical problem may occur in the denominator $\|w_g\|_2$ of [Equation 23].

$w_g=0$ denotes $\omega_{g,i}=0$. Thus, when $w_g=0$, may be set to zero or a small number may be added to the denominator.

When Equation 23 is re-expressed using a scaling factor, Equation 23 is the same as Equation 24.

[Equation 24]

$$\tilde{\omega}_{g,i} = \left( \sigma(\alpha_g)\|\mathbf{w}_g\|_2 - \sigma(\beta_g) \right)_+ \omega_{g,i}$$

Referring to Equation 24, $\alpha$ is a learnable scale parameter.

According to an embodiment of the present invention, a solution for unstructured sparsity is provided. Similar to the solution for structured sparsity, an original model parameter $\omega_{g,i}$ is re-parameterized in a sub-differentiable form or a differentiable form in almost all input domains as in Equation 25 so that the model parameter may become zero when the value of the model parameter is smaller than a certain value.

[Equation 25]

$$\tilde{\omega}_{g,i} = sign\left(\omega_{g,i}\right)\left( |\omega_{g,i}| - \sigma(\beta_g)\|\mathbf{w}_g\|_1 \right)_+$$

The proximal operator of Expression 22 has a similar form to Equation 25. However, the proximal operator is a learning rule, whereas Equation 25 is in a parameterized form of a model parameter, which is a part of a neural network. Their meanings are totally different. Accordingly, according to an embodiment of the present invention, by learning a model parameter $\omega_{g,i}$ and a threshold parameter $\beta_g$, unnecessary parameters may be made to be zero.

In Equation 23, the entire group tends to be removed together. In Equation 25, individual parameters may become zero according to a relative size in the group.

However, the configuration of Equation 25 does not refer to the exclusion of structured sparsity.

Group regularization such as $l_{2,1}$-norm may induce parameters in the same group to have the same value. By increasing the threshold, all the parameters may be removed. Therefore, by using $l_{2,1}$-norm as a regularizer, it is possible to induce all parameters in the group to be removed at the same time.

The gradient of a sign function is almost zero in all sections, but does not cause a problem for the latest deep learning tool.

Equation 25 may be expressed as Equation 26.

[Equation 26]

$$\tilde{\omega}_{g,i} = \begin{cases} \left( \omega_{g,i} + \sigma(\beta_g)\|\mathbf{w}_g\|_1 \right)_- & \text{if } \omega_{g,i} < 0 \\ \left( \omega_{g,i} + \sigma(\beta_g)\|\mathbf{w}_g\|_1 \right)_+ & \text{otherwise,} \end{cases}$$

Referring to Expression 18, $(\cdot)_-$ is $\min(\cdot,0)$.

Depending on whether the value of the original variable $w_{g,i}$ is negative or not, the variable may be individually controlled.

Such a conditional statement may be implemented using tf.cond or tf.where of TensorFlow.

According to an embodiment of the present invention, a regularized objective function is expressed as Expression 27.

[Expression 27]

$$L(D,W,A) + \lambda R(\tilde{W})$$

D is a set of training data, W and $\tilde{W}$ are original and reformulated model parameters, and β is a set of threshold parameters.

Generally, regularization is applied to free parameters, that is, W. However, it is more appropriate for regularization to apply to $\tilde{W}$ because $\tilde{W}$ is a function of β.

Through the threshold parameter, learning information may be directly obtained from the regularization term. Accordingly, it is possible to better learn how to strike a balance between prediction loss and model complexity.

[Equation 23] and [Equation 25] can be seen to be derived from $l_{2,1}$-norm and $l_{1,2}$-norm, respectively, but $l_{2,1}$-norm and $l_{1,2}$-norm do not need to be used in a pair and may be used in combination of various regularizers. This is because Equation 23 and Equation 25 are obtained by reconfiguring model parameters such that the model parameters or unnecessary components of a neural network are zero through the learning and the model parameters are still part of the neural network.

The p-norms applied to the above-described embodiments may be expressed as Equation 28.

[Equation 28]

$$\mathcal{R}(\tilde{W}) = \sum_{g} \left\| \tilde{\mathbf{w}}_g \right\|_p = \sum_{g} \left( \sum_{i} \left| \tilde{\omega}_{g,i} \right|^p \right)^{\frac{1}{p}}$$

It is well known that a p-norm has a characteristic that induces sparsity. However, an effective optimization method for exactly making variables be zero on the basis of a p-norm with p<1 in Equation 28 has not been developed, and thus a p-norm with p<1 are not used often in practice. That is, although a p-norm with p<1 is more ideal for inducing sparsity, $l_1$-norm (with p=1) is more widely used. However, according to an embodiment of the present invention, when differentiation is possible in almost all sections, various types of regularizers, which includes a p-norm with p<1 in Equation 28, may be used.

When the size of a group or a parameter is smaller than a threshold, learning information is not generated because the gradient of relu is zero.

In an embodiment of the present invention, relu may be used in a forward pass, and elu may be used in a backward pass so that learning information can be generated even when the size of a group or parameter is smaller than a threshold.

In the early stages of training, it may be difficult to describe which parameters are necessary or unnecessary because parameters are randomly initialized.

Gradual scheduling λ prevents sudden and early dropping.

Gradual scheduling λ may smoothly modify a deep neural network structure and make a learning process more stable.

According to an embodiment of the present invention, the value of λ may gradually increase from the initial value $λ_i$ to the final value $λ_f$ until n epochs.

$λ_t$, which starts from the epoch of to and increases with each epoch, may be expressed as Equation 29.

[Equation 29]

$$\lambda_t = \lambda_f + (\lambda_i - \lambda_f)\left(1 - \frac{t - t_0}{n}\right)^3$$

t is an index indicating each epoch.

Table 1 below is the performance of MNIST.

| λ | Top-1 Error(%) | | Min | | Median | | Max | |
|---|---|---|---|---|---|---|---|---|
| | Avg. | Std. | Err.(%) | Spar.(%) | Err.(%) | Spar.(%) | Err.(%) | Spar.(%) |
| 0.000 | 0.36 | 0.01 | 0.35 | 0.00 | 0.36 | 0.00 | 0.38 | 0.00 |
| 0.010 | 0.37 | 0.04 | 0.31 | 11.90 | 0.38 | 14.29 | 0.44 | 5.95 |
| 0.015 | 0.37 | 0.01 | 0.36 | 17.86 | 0.37 | 27.38 | 0.39 | 17.86 |

(continued)

| λ | Top-1 Error(%) | | Min | | Median | | Max | |
|---|---|---|---|---|---|---|---|---|
| | Avg. | Std. | Err.(%) | Spar.(%) | Err.(%) | Spar.(%) | Err.(%) | Spar.(%) |
| 0.020 | 0.40 | 0.06 | 0.32 | 26.19 | 0.39 | 26.19 | 0.48 | 30.95 |
| 0.025 | 0.39 | 0.03 | 0.35 | 38.10 | 0.38 | 34.52 | 0.44 | 28.57 |

Table 2 below is the performance of MNIST using rectified gradient flow.

| λ | Top-1 Error(%) | | Min | | Median | | Max | |
|---|---|---|---|---|---|---|---|---|
| | Avg. | Std. | Err.(%) | Spar.(%) | Err.(%) | Spar.(%) | Err.(%) | Spar.(%) |
| 0.000 | 0.36 | 0.01 | 0.35 | 0.00 | 0.36 | 0.00 | 0.38 | 0.00 |
| 0.010 | 0.38 | 0.03 | 0.33 | 13.10 | 0.38 | 11.90 | 0.43 | 10.71 |
| 0.025 | 0.37 | 0.04 | 0.32 | 36.90 | 0.37 | 25.00 | 0.44 | 35.71 |
| 0.050 | 0.39 | 0.05 | 0.31 | 45.24 | 0.39 | 57.14 | 0.45 | 41.67 |
| 0.075 | 0.34 | 0.03 | 0.28 | 44.05 | 0.36 | 50.00 | 0.37 | 53.57 |
| 0.100 | 0.38 | 0.04 | 0.30 | 47.62 | 0.39 | 53.57 | 0.41 | 58.33 |

Table 3 below is the performance of CIFAR-10 using rectified gradient flow.

| λ | Top-1 Error(%) | | Min | | Median | | Max | |
|---|---|---|---|---|---|---|---|---|
| | Avg. | Std. | Err.(%) | Spar.(%) | Err.(%) | Spar.(%) | Err.(%) | Spar.(%) |
| 0.00 | 7.02 | 0.14 | 6.87 | 0.00 | 6.96 | 0.00 | 7.28 | 0.00 |
| 0.10 | 6.91 | 0.14 | 6.72 | 3.57 | 6.86 | 8.33 | 7.14 | 5.95 |
| 0.15 | 7.17 | 0.26 | 6.82 | 13.10 | 7.30 | 8.33 | 7.48 | 15.48 |
| 0.20 | 7.12 | 0.29 | 6.77 | 14.29 | 7.28 | 14.29 | 7.45 | 10.71 |
| 0.25 | 7.00 | 0.15 | 6.82 | 20.24 | 7.04 | 20.24 | 7.23 | 16.67 |
| 0.30 | 7.13 | 0.36 | 6.46 | 15.48 | 7.20 | 30.95 | 7.45 | 27.38 |

Table 4 below is the performance of CIFAR-100 using rectified gradient flow.

| λ | Top-1 Error(%) | | Min | | Median | | Max | |
|---|---|---|---|---|---|---|---|---|
| | Avg. | Std. | Err.(%) | Spar.(%) | Err.(%) | Spar.(%) | Err.(%) | Spar.(%) |
| 0.00 | 30.12 | 0.80 | 29.05 | 0.00 | 30.41 | 0.00 | 31.24 | 0.00 |
| 0.25 | 30.32 | 0.83 | 29.28 | 5.95 | 30.61 | 7.14 | 31.21 | 3.57 |
| 0.30 | 30.51 | 0.35 | 30.19 | 5.95 | 30.31 | 5.95 | 31.16 | 11.90 |
| 0.35 | 29.95 | 0.55 | 28.97 | 13.10 | 30.22 | 10.71 | 30.43 | 7.14 |
| 0.40 | 30.54 | 0.62 | 29.40 | 16.67 | 30.80 | 16.67 | 31.19 | 4.76 |
| 0.45 | 30.03 | 0.54 | 29.39 | 11.90 | 29.85 | 14.29 | 31.01 | 14.29 |

Table 5 below is the performance of CIFAR-10 using Gradual Sparsity Regularization.

| $\lambda_f$ | Top-1 Error(%) | | Min | | Median | | Max | |
|---|---|---|---|---|---|---|---|---|
| | Avg. | Std. | Err.(%) | Spar.(%) | Err.(%) | Spar.(%) | Err.(%) | Spar.(%) |
| 0.0000 | 6.79 | 0.26 | 6.51 | 0.00 | 6.79 | 0.00 | 7.26 | 0.00 |
| 0.0025 | 6.93 | 0.16 | 6.65 | 23.46 | 6.93 | 20.99 | 7.13 | 18.52 |
| 0.0050 | 7.04 | 0.26 | 6.73 | 27.16 | 6.93 | 35.80 | 7.49 | 37.04 |
| 0.0075 | 6.92 | 0.28 | 6.69 | 28.40 | 6.82 | 29.63 | 7.48 | 39.51 |

(continued)

| $\lambda_f$ | Top-1 Error(%) | | Min | | Median | | Max | |
|---|---|---|---|---|---|---|---|---|
| | Avg. | Std. | Err.(%) | Spar.(%) | Err.(%) | Spar.(%) | Err.(%) | Spar.(%) |
| 0.0100 | 6.91 | 0.37 | 6.60 | 44.44 | 6.65 | 48.15 | 7.51 | 40.74 |
| 0.0125 | 7.44 | 0.41 | 6.94 | 50.62 | 7.29 | 48.15 | 7.95 | 45.68 |

Table 6 below is the performance of CIIFAR-10 using $l_{2,1}$ norm.

| $\lambda_f$ | Top-1 Error(%) | | Min | | Median | | Max | |
|---|---|---|---|---|---|---|---|---|
| | Avg. | Std. | Err.(%) | Spar.(%) | Err.(%) | Spar.(%) | Err.(%) | Spar.(%) |
| 0.0000 | 6.79 | 0.26 | 6.51 | 0.00 | 6.79 | 0.00 | 7.26 | 0.00 |
| 0.0025 | 6.83 | 0.16 | 6.72 | 3.70 | 6.74 | 0.00 | 7.13 | 1.23 |
| 0.0050 | 6.77 | 0.19 | 6.53 | 11.11 | 6.75 | 11.11 | 7.10 | 13.58 |
| 0.0075 | 6.91 | 0.15 | 6.72 | 24.69 | 6.85 | 24.69 | 7.13 | 18.52 |
| 0.0100 | 7.28 | 0.14 | 7.14 | 41.98 | 7.23 | 38.27 | 7.51 | 44.44 |
| 0.0125 | 7.47 | 0.34 | 7.03 | 46.91 | 7.46 | 50.62 | 7.97 | 43.21 |

Table 7 below is traffic speed prediction and exclusive sparsity using GCN.

|  | (a) Proximal operator | | | | | (b) Proposed | | | |
|---|---|---|---|---|---|---|---|---|---|
| $\lambda$ | #N.Z. | MAPE(%) | L.R.$_{(\times 100)}$ | | $\lambda$ | #N.Z. | MAPE(%) | L.R.$_{(\times 100)}$ | |
| | | | $k = 1$ | $k = 2$ | | | | $k = 1$ | $k = 2$ |
| 3 | 12,895 | 5.3898 | 57.24 | 62.42 | 3 | 6,170 | 5.3891 | 50.75 | 58.74 |
| 5 | 11,915 | 5.3933 | 55.48 | 60.90 | 5 | 5,692 | 5.3872 | 52.90 | 60.86 |
| 10 | 8,723 | 5.4894 | 33.39 | 40.35 | 10 | 5,009 | 5.3999 | 53.68 | 61.64 |
| 15 | 7,584 | 5.5395 | 13.37 | 18.05 | 15 | 4.704 | 5.3948 | 55.83 | 63.68 |

Table 8 below is traffic speed prediction and exclusive sparsity of $\tilde{\gamma}$ using GCN.

| $\lambda$ | #N.Z. | MAPE(%) | L.R.$_{(\times 100)}$ | |
|---|---|---|---|---|
| | | | $k = 1$ | $k = 2$ |
| 3 | 1,211 | 5.4089 | 70.47 | 77.04 |
| 5 | 1,161 | 5.4408 | 69.73 | 75.54 |
| 10 | 924 | 5.4695 | 70.66 | 76.24 |
| 15 | 871 | 5.4696 | 66.63 | 72.06 |

Table 9 below is the performance of ResNet in CIFAR-10.

| $\lambda$ | Top-1 Error(%) | | Min | | Median | | Max | |
|---|---|---|---|---|---|---|---|---|
| | Avg. | Std. | Err.(%) | # Zeros | Err.(%) | # Zeros | Err.(%) | # Zeros |
| 0.000 | 5.05 | 0.18 | 4.90 | 0/0/0 | 4.96 | 0/0/0 | 5.37 | 0/0/0 |
| 0.020 | 5.00 | 0.16 | 4.86 | 2/0/0 | 4.88 | 2/0/0 | 5.25 | 2/0/0 |
| 0.025 | 5.16 | 0.13 | 4.99 | 4/0/0 | 5.19 | 4/1/0 | 5.35 | 4/0/0 |
| 0.030 | 5.50 | 0.14 | 5.31 | 5/3/0 | 5.47 | 4/1/0 | 5.73 | 6/3/0 |

Table 10 below is the performance of ResNeXt in CIFAR-10.

| λ | Top-1 Error(%) | | Min | | Median | | Max | |
| --- | --- | --- | --- | --- | --- | --- | --- | --- |
| | Avg. | Std. | Err.(%) | # Zeros | Err.(%) | # Zeros | Err.(%) | # Zeros |
| 0.0000 | 5.40 | 0.12 | 5.17 | 0/0/0 | 5.48 | 0/0/0 | 5.50 | 0/0/0 |
| 0.0100 | 5.53 | 0.11 | 5.33 | 0/0/5 | 5.58 | 0/2/4 | 5.63 | 0/0/2 |
| 0.0125 | 5.67 | 0.21 | 5.30 | 0/3/4 | 5.77 | 0/3/4 | 5.88 | 1/2/4 |
| 0.0150 | 5.67 | 0.09 | 5.56 | 1/4/4 | 5.68 | 1/1/3 | 5.80 | 2/5/5 |

Meanwhile, the method for structure learning and model compression for a deep neural network according to an embodiment of the present invention may be implemented in a computer system or recorded on a recording medium. The computer system may include at least one processor, memory, user input device, data communication bus, user output device, and storage. The above-described elements perform data communication through the data communication bus.

The computer system may further include a network interface coupled to a network. The processor may be a central processing unit (CPU) or a semiconductor device for processing instructions stored in a memory and/or a storage.

The memory and storage may include various types of volatile or non-volatile storage media. For example, the memory may include a read-only memory (ROM) and a random access memory (RAM).

Accordingly, the method for structure learning and model compression for a deep neural network according to an embodiment of the present invention may be implemented as a computer-executable method. When the method for structure learning and model compression for a deep neural network according to an embodiment of the present invention is performed by a computer device, computer-readable instructions may implement the method for structure learning and model compression for a deep neural network according to the present invention.

The method for structure learning and model compression for a deep neural network according to the present invention may be implemented as computer-readable code in a computer-readable recording medium. The computer-readable recording medium includes any type of recording medium in which data that can be decrypted by a computer system is stored. For example, the computer-readable recording medium may include a ROM, a RAM, a magnetic tape, a magnetic disk, a flash memory, an optical data storage device, and the like. Further, the computer-readable recording media can be stored and carried out as code that is distributed in a computer system connected to a computer network and that are readable in a distributed manner.

**Claims**

1. A method for structure learning and model compression for a deep neural network, the method comprising:

   (a) generating a parameter for a neural network model;
   (b) generating an objective function corresponding to the neural network model on the basis of the parameter; and
   (c) performing training on the parameter and performing model learning on the basis of the objective function and learning data.

2. The method of claim 1, wherein the neural network model includes a plurality of components, and the plurality of components are grouped into a plurality of modules.

3. The method of claim 1, wherein (a) comprises generating architecture parameters and model parameters for the neural network model.

4. The method of claim 3, wherein some of the architecture parameters become zero during the training to remove unnecessary or insignificant components.

5. The method of claim 4, wherein when the strength of a component corresponding to an architecture parameter becomes smaller than a certain numerical value in a competitive group, the neural network model excludes the component from the competitive group.

6. The method of claim 1, wherein (c) comprises performing the training on the parameter using stochastic gradient descent.

7. The method of claim 6, wherein (c) comprises simultaneously performing learning on weight and learning on a neural network structure.

8. The method of claim 6, wherein (c) comprises performing gradient computation using an element obtained by modifying the stochastic gradient descent, and performing forward computation and backward computation.

9. The method of claim 1, further comprising (b-1) generating and storing a lightweight model on the basis of a result of the training in (c).

10. The method of claim 1, further comprising (a-1) re-parameterizing the parameter after (a) and before (b).

11. The method of claim 10, wherein (a-1) comprises performing the re-parameterizing of the parameter such that the parameter becomes zero.

12. The method of claim 10, wherein (a-1) comprises performing the re-parameterizing of the parameter in a sub-differentiable form such that the parameter becomes zero.

# FIG. 1

FIG. 2

START

S100

GENERATE OBJECTIVE FUNCTION ON
BASIS OF NEURAL NETWORK MODEL

S200

GENERATE LIGHTWEIGHT MODEL BY PERFORMING
TRAINING ON BASIS OF OBJECTIVE FUNCTION
AND LEARNING DATA

S300

PERFORM NEURAL NETWORK COMPUTATIONS
ON BASIS OF LIGHTWEIGHT MODEL

END

# FIG. 3

START

S110

INPUT NEURAL NETWORK MODEL

S120

CHOOSE GROUP FOR COMPONENTS

S130

SET IMPORTANCE PARAMETER

S140

SET OBJECTIVE FUNCTION

END

# FIG. 4

START

S210
INPUT NEURAL NETWORK MODEL
AND OBJECTIVE FUNCTION

S220
k=1

S230
INPUT KTH LEARNING DATA

S240
COMPUTE GRADIENT

S250
UPDATE PARAMETERS
(MODEL PARAMETER AND
IMPORTANCE PARAMETER)

S260
K = MAX? ── NO ──▶ k=k+1

S261

YES

S270
GENERATE AND
STORE LIGHTWEIGHT
NEURAL NETWORK MODEL

END

# FIG. 5

ResNet

INPUT DATA
$(x^s)$

SC1

FIRST RESIDUAL BLOCK
(RB1)

SC2

SECOND RESIDUAL BLOCK
(RB2)

SC3

THIRD RESIDUAL BLOCK
(RB3)

OUTPUT DATA
$(y^s)$

# FIG. 6

ResNeXt

INPUT DATA
$(x^{s,b})$

SCb

FIRST
RESIDUAL BLOCK
(RB1b)

SECOND
RESIDUAL BLOCK
(RB2b)

THIRD
RESIDUAL BLOCK
(RB3b)

$+$

OUTPUT DATA
$(y^{s,b})$

# FIG. 7

# FIG. 8

FIG. 9

## INTERNATIONAL SEARCH REPORT

| International application No. |
| --- |
| **PCT/KR2020/013304** |

| A. | CLASSIFICATION OF SUBJECT MATTER |
| --- | --- |

**G06N 3/08**(2006.01)i; **G06N 3/04**(2006.01)i

According to International Patent Classification (IPC) or to both national classification and IPC

| B. | FIELDS SEARCHED |
| --- | --- |

Minimum documentation searched (classification system followed by classification symbols)

G06N 3/08; G06K 9/00; G06N 20/00; G06N 3/04; G06N 7/00; G06N 99/00

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 신경망(neural network), 파라미터(parameter), 목적 함수(objective function), 학습 (learning), 컴포넌트(component)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2019-046236 A (TOSHIBA CORP.) 22 March 2019. See paragraphs [0010], [0019]-[0022] and [0063]. | 1,6,7,9 |
| A | | 2-5,8,10-12 |
| A | US 2019-0102640 A1 (INFINEON TECHNOLOGIES AG) 04 April 2019. See paragraphs [0033]-[0086]. | 1-12 |
| A | US 2016-0328655 A1 (PRESIDENT AND FELLOWS OF HARVARD COLLEGE et al.) 10 November 2016. See paragraphs [0004]-[0046]. | 1-12 |
| A | US 2017-0270407 A1 (GOOGLE INC.) 21 September 2017. See paragraphs [0004]-[0012]. | 1-12 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 December 2020** | **05 January 2021** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2020/013304**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2016-0062052 A (QUALCOMM INCORPORATED) 01 June 2016. See paragraphs [0006]-[0011]. | 1-12 |

Form PCT/ISA/210 (second sheet) (July 2019)

**INTERNATIONAL SEARCH REPORT**
Information on patent family members

International application No.

**PCT/KR2020/013304**

| Patent document cited in search report | | | Publication date (day/month/year) | Patent family member(s) | | | Publication date (day/month/year) |
|---|---|---|---|---|---|---|---|
| JP | 2019-046236 | A | 22 March 2019 | JP | 6773618 | B2 | 21 October 2020 |
| | | | | US | 2019-0073587 | A1 | 07 March 2019 |
| US | 2019-0102640 | A1 | 04 April 2019 | DE | 102018123143 | A1 | 04 April 2019 |
| | | | | JP | 2019-079505 | A | 23 May 2019 |
| | | | | KR | 10-2019-0038318 | A | 08 April 2019 |
| | | | | US | 10482337 | B2 | 19 November 2019 |
| US | 2016-0328655 | A1 | 10 November 2016 | EP | 3000053 | A2 | 30 March 2016 |
| | | | | JP | 6483667 | B2 | 13 March 2019 |
| | | | | JP | 2016-523402 | A | 08 August 2016 |
| | | | | KR | 10-2016-0041856 | A | 18 April 2016 |
| | | | | US | 10074054 | B2 | 11 September 2018 |
| | | | | US | 10346757 | B2 | 09 July 2019 |
| | | | | US | 2014-0358831 | A1 | 04 December 2014 |
| | | | | US | 2016-0292129 | A1 | 06 October 2016 |
| | | | | US | 2016-0328653 | A1 | 10 November 2016 |
| | | | | US | 2020-0027012 | A1 | 23 January 2020 |
| | | | | US | 9858529 | B2 | 02 January 2018 |
| | | | | US | 9864953 | B2 | 09 January 2018 |
| | | | | WO | 2014-194161 | A2 | 04 December 2014 |
| | | | | WO | 2014-194161 | A3 | 29 January 2015 |
| US | 2017-0270407 | A1 | 21 September 2017 | CN | 109074517 | A | 21 December 2018 |
| | | | | EP | 3430577 | A1 | 23 January 2019 |
| | | | | JP | 2019-513267 | A | 23 May 2019 |
| | | | | JP | 6636172 | B2 | 29 January 2020 |
| | | | | KR | 10-2018-0122443 | A | 12 November 2018 |
| | | | | WO | 2017-160393 | A1 | 21 September 2017 |
| KR | 10-2016-0062052 | A | 01 June 2016 | BR | 112016007313 | A2 | 01 August 2017 |
| | | | | CA | 2924048 | A1 | 09 April 2015 |
| | | | | CN | 105637539 | A | 01 June 2016 |
| | | | | CN | 105637539 | B | 27 March 2018 |
| | | | | EP | 3053105 | A2 | 10 August 2016 |
| | | | | JP | 6092477 | B2 | 08 March 2017 |
| | | | | JP | 2016-536664 | A | 24 November 2016 |
| | | | | US | 2015-0095273 | A1 | 02 April 2015 |
| | | | | US | 9305256 | B2 | 05 April 2016 |
| | | | | WO | 2015-050641 | A2 | 09 April 2015 |
| | | | | WO | 2015-050641 | A3 | 04 June 2015 |
| | | | | KR | 10-1700145 | B1 | 26 January 2017 |

Form PCT/ISA/210 (patent family annex) (July 2019)